# EUROPEAN PATENT APPLICATION

(11) **EP 4 629 238 A1**
(43) Date of publication of application: **08.10.2025**
(21) Application number: 25160133.2
(22) Date of filing: 26.02.2025
(51) Int. Cl.: G10L 21/0208, H04M 9/08, G10L 21/0216

(54) **PROCESSING OF CAPTURED MULTI-CHANNEL AUDIO TO MITIGATE THE PROBLEM OF ACOUSTIC ECHO**

(30) Priority: 02.04.2024 GB 202404651
(71) Applicant: Nokia Technologies Oy, 02610 Espoo (FI)
(72) Inventor: VILERMO, Miikka Tapani, Siuro (FI); MÄKINEN, Jorma Juhani, Tampere (FI)
(74) Representative: Nokia EPO representatives

(57) **Abstract**

An apparatus comprising means for:
rendering a received output audio signal via at least one audio output;
locally capturing multi-channel input audio, wherein the multi-channel input audio comprises multiple audio input channels comprising at least:
a first audio input channel comprising audio captured at a first microphone; and
a second audio input channel comprising audio captured at a second microphone; and
processing the multi-channel input audio to produce a multi-channel input audio signal representing local captured audio, wherein processing the multi-channel input audio comprises suppressing spatiality of an acoustic echo wherein suppressing the spatiality of an acoustic echo comprises de-localizing a sound source representing the acoustic echo

## Description

### TECHNOLOGICAL FIELD

Examples of the disclosure relate to processing of captured multi-channel audio to mitigate the problem of acoustic echo.

### BACKGROUND

Spatial audio capture uses multiple microphones to capture multi-channel audio. Spatial audio rendering uses multiple speakers to output multi-channel audio.

Acoustic Echo Cancellation when applied to captured multi-channel audio can produce acoustic echo cancellation artefacts.

It would be desirable to improve processing of captured multi-channel audio to mitigate the problem of acoustic echo.

### BRIEF SUMMARY

According to various, but not necessarily all, examples there is provided
an apparatus comprising means for:
rendering a received output audio signal via at least one audio output;
locally capturing multi-channel input audio, wherein the multi-channel input audio comprises multiple audio input channels comprising at least:
   a first audio input channel comprising audio captured at a first microphone; and
   a second audio input channel comprising audio captured at a second microphone; and
processing the multi-channel input audio to produce a multi-channel input audio signal representing local captured audio, wherein processing the multi-channel input audio comprises suppressing spatiality of an acoustic echo,
wherein suppressing the spatiality of an acoustic echo comprises de-localizing a sound source representing the acoustic echo.

De-localizing a sound source removes or significantly diminishes its apparent directionality and makes the sound source more diffuse. In some examples, this is achieved by spreading sound across multiple spatial channels such that it is diffuse and without specific directionality.

In some but not necessarily all examples, suppressing the spatiality of an acoustic echo comprises spreading a sound source representing the acoustic echo across the multiple audio input channels.

In some but not necessarily all examples, suppressing the spatiality of an acoustic echo comprises adding audio to the multiple audio input channels based on the same audio captured by one or more microphones or based on the same audio rendered by one or more audio outputs.

In some but not necessarily all examples, suppressing the spatiality of an acoustic echo comprises adding mono audio to the multiple audio input channels.

In some but not necessarily all examples, suppressing the spatiality of an acoustic echo comprises acoustic echo mixing the same audio signal, with the same or different gain weightings, to multiple audio input channels.

In some but not necessarily all examples, the multi-channel output audio comprises multiple audio output channels, wherein the same audio signal is: one of the audio output channels; a combination of multiple ones of the multiple audio output channels; one of the audio input channels; a combination of multiple ones of the multiple audio input channels.

In some but not necessarily all examples, the same audio signal is:
a delayed one of the audio output channels; a delayed combination of multiple ones of the multiple audio output channels.

In some but not necessarily all examples, the apparatus comprises means for adapting suppressing spatiality of the acoustic echo.

In some but not necessarily all examples, the multi-channel output audio comprises multiple audio output channels rendered via respective audio outputs, wherein processing the multi-channel input audio comprises at least, for each of at least a sub set of the multiple audio input channels:
performing adaptive filtering for the audio input channel using an adaptive filter based on the multiple audio output channels;
after performing adaptive filtering, mixing in audio based on the same audio captured by the same one or more microphones or based on the same audio rendered by the same one or more audio outputs,
wherein the same one or more microphones used to capture the same audio are the same at least for each of the sub set of the multiple audio input channels and wherein the same one or more audio outputs used to render the same audio are the same at least for each of the sub set of the multiple audio input channels.

In at least some example, suppressing the spatiality of an acoustic echo comprises de-localizing a sound source representing the acoustic echo.

In some but not necessarily all examples, the performing adaptive filtering for the audio input channel using an adaptive filter based on the multiple audio output channels is a stage in acoustic echo cancellation.

In some but not necessarily all examples, the apparatus comprises telecommunication means for receiving the multi-channel output audio signal and for transmitting the processed multi-channel input audio as the multi-channel input audio signal.

In some but not necessarily all examples, the apparatus is configured as user equipment.

According to various, but not necessarily all, examples there is provided
a method comprising:
rendering a received output audio signal via at least one audio output;
capturing multi-channel input audio, wherein the multi-channel input audio comprises multiple audio input channels comprising at least:
   a first audio input channel comprising audio captured at a first microphone; and
   a second audio input channel comprising audio captured at a second microphone; and
processing the multi-channel input audio to produce a multi-channel input audio signal representing local captured audio, wherein processing the multi-channel input audio comprises suppressing spatial audio for an acoustic echo .

In at least some examples, suppressing the spatiality of an acoustic echo comprises de-localizing a sound source representing the acoustic echo.

According to various, but not necessarily all, examples there is provided
an apparatus comprising means for:
rendering a received output audio signal via at least one audio output;
processing captured multi-channel input audio, comprising multiple audio input channels including at least a first audio input channel comprising audio captured at a first microphone and a second audio input channel comprising audio captured at a second microphone,
to produce a multi-channel input audio signal representing local captured audio, wherein processing the multi-channel input audio comprises suppressing spatial audio for an acoustic echo .

In at least some examples, suppressing the spatiality of an acoustic echo comprises de-localizing a sound source representing the acoustic echo.

According to various, but not necessarily all, examples there is provided
an apparatus comprising means for:
rendering a received output audio signal via at least one audio output;
locally capturing multi-channel input audio, wherein the multi-channel input audio comprises multiple audio input channels comprising at least:
   a first audio input channel comprising audio captured at a first microphone; and
   a second audio input channel comprising audio captured at a second microphone; and
processing the multi-channel input audio to produce a multi-channel input audio signal representing local captured audio, wherein processing the multi-channel input audio comprises de-localizing a sound source representing an acoustic echo.

In at least some example, suppressing the spatiality of an acoustic echo comprises de-localizing a sound source representing the acoustic echo.

According to various, but not necessarily all, examples there is provided
an apparatus comprising means for:
rendering a received output audio signal via at least one audio output;
locally capturing multi-channel input audio, wherein the multi-channel input audio comprises multiple audio input channels comprising at least:
   a first audio input channel comprising audio captured at a first microphone; and
   a second audio input channel comprising audio captured at a second microphone; and
processing the multi-channel input audio to produce a multi-channel input audio signal representing local captured audio, wherein processing the multi-channel input audio comprises suppressing spatial audio for an acoustic echo,
wherein spatial audio for a sound source comprises changeably controlling a location of a sound source and wherein suppressing spatial audio for an acoustic echo comprises de-localizing a sound source representing the acoustic echo.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example of an apparatus 10 for processing 38 multi-channel input audio 37 to suppress spatiality of an acoustic echo;
FIG. 2 shows an example of an apparatus 10 for processing 38 multi-channel input audio 37 to suppress spatiality of an acoustic echo in the round-trip between a near-end and a far-end of the telecommunication system;
FIG. 3 shows an example of an apparatus 10 for processing 38 multi-channel input audio 37 to suppress spatiality of an acoustic echo;
FIG. 4 shows an example of an apparatus 10 for processing 38 multi-channel input audio 37 to suppress spatiality of an acoustic echo in the round-trip between a near-end and a far-end of the telecommunication system;
FIG. 5 shows an example of an apparatus 10 for processing 38 multi-channel input audio 37 to suppress spatiality of an acoustic echo comprising acoustic echo cancellation, acoustic echo cancellation artefact masking and spatial processing;
FIG. 6 shows an example of an apparatus 10 for processing 38 multi-channel input audio 37 to suppress spatiality of an acoustic echo using a echo cancellation artefact masking signal 41 common to the channels and based on locally captured audio;
FIG. 7 shows an example of an apparatus 10 for processing 38 multi-channel input audio 37 to suppress spatiality of an acoustic echo using an amplified echo cancellation artefact masking signal 41 common to the channels and based on locally captured audio;
FIG. 8 shows an example of an apparatus 10 for processing 38 multi-channel input audio 37 to suppress spatiality of an acoustic echo using an amplified echo cancellation artefact masking signal 41 common to the channels and based on locally output audio;
FIG. 9 shows an example of a method for suppressing spatiality of an acoustic echo;
FIG. 10 shows an example of a controller for an apparatus 10 for processing 38 multi-channel input audio 37 to suppress spatiality of an acoustic echo;
FIG. 11 shows an example of a computer program for causing processing 38 of multi-channel input audio 37 to suppress spatiality of an acoustic echo.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. 36) and a specific instance of the class (member of the set) can be referenced using the reference number with a numerical type subscript index (e.g. 36_1) and a non-specific instance of the class (member of the set) can be referenced using the reference number with a variable type subscript index (e.g. 36_i or 36_j).

### DEFINITIONS

Acoustic echo in this document is audio in a telecommunications setup that is captured by a microphone at a far end, is transmitted from the far end to a near end, is played from a speaker at the near end, is captured by a microphone at the near end, is transmitted back to the far end, and is played from a speaker at the far end.

Spatial audio is a technique for rendering audio that allows a sound source to be controllably located in a sound space and to be controllably moved within that sound space. The location can be a bearing in two or three dimensions or a position in two or three dimensions, for example. Spatial audio capture uses multiple microphones to capture multi-channel audio. Spatial audio rendering uses multiple speakers to output multi-channel audio.

Acoustic Echo Cancellation is a digital processing technique that reduces the perception of acoustic echo and comprises at least performing adaptive filtering of captured audio using an adaptive filter based on the rendered audio. The adaptive filter seeks to reduce a difference between the filtered captured audio and the expected captured audio based on the rendered audio. Acoustic Echo Cancellation is performed on each audio input channel (audio captured at a particular microphone) independently.

### DETAILED DESCRIPTION

The following relates to examples of an apparatus 10 comprising means for:
rendering 20 a received output audio signal 21 via at least one audio output 24;
locally capturing multi-channel input audio, wherein the multi-channel input audio 37 comprises multiple audio input channels 36 comprising at least:
   a first audio input channel 36_1 comprising first audio signal 35_1 captured at a first microphone 34_1; and
   a second audio input channel 36_2 comprising second audio signal 35_2 captured at a second microphone 34_1; and
processing 38 the multi-channel input audio 37 to produce a multi-channel input audio signal 39 representing local captured audio, wherein processing 38 the multi-channel input audio 37 comprises suppressing spatiality of an acoustic echo.

Acoustic echo is audio in a telecommunications setup that is captured by a microphone at a far end (remote from the apparatus 10), is transmitted from the far end to a near end (local to the apparatus 10), is played from an audio output (e.g. at least one speaker) at the near end (local to the apparatus 10), is captured by a microphone at the near end (local to the apparatus 10), is transmitted back to the far end (remote from the apparatus 10), and is played from a speaker at the far end (remote from the apparatus 10).

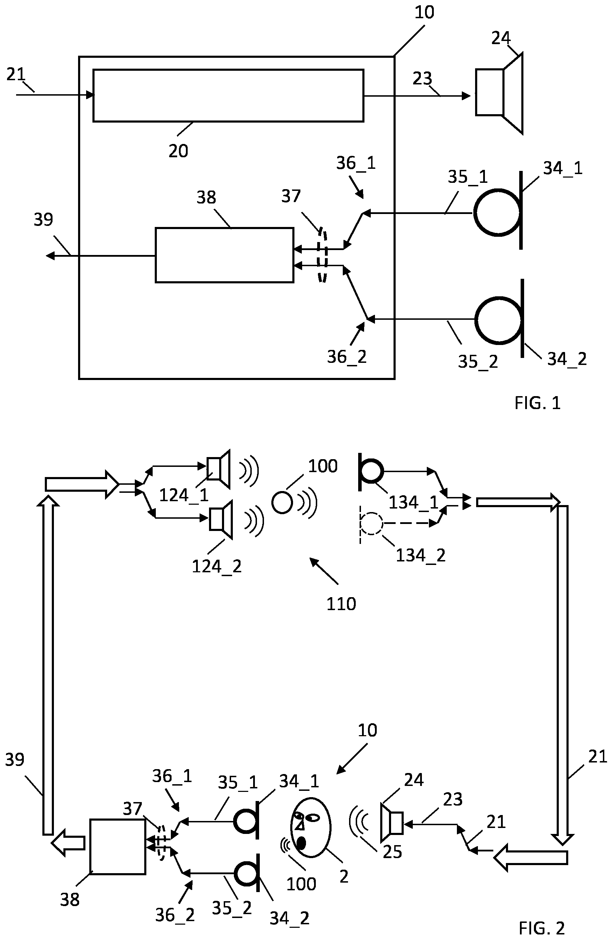

FIG. 1 illustrates an apparatus 10. The apparatus 10 is configured to render 20 a received output audio signal 21 via at least one audio output 24 (e.g. speaker) and is configured to capture multi-channel input audio 37 using multiple microphones 34.

The apparatus 10 comprises means for receiving an output audio signal 21 and means for rendering 20 the output audio signal 21, as rendered audio 23, via at least one audio output 24.

The apparatus 10 comprises means for locally capturing multi-channel input audio 37. The multi-channel input audio 37 comprises multiple audio input channels 36 comprising at least:
a first audio input channel 36_1 comprising first audio signal 35_1 captured at a first microphone 34_1; and
a second audio input channel 36_2 comprising second audio signal 35_2 captured at a second microphone 34_2.

The apparatus 10 comprises means for processing 38 the multi-channel input audio 37 to produce a multi-channel input audio signal 39 representing local captured audio.

The processing 38 of the multi-channel input audio 37 comprises suppressing spatiality of an acoustic echo.

Referring to FIG 2, in some examples, the apparatus 10 is a telecommunication terminal.

Acoustic echo is audio in a telecommunications setup that is captured by at least one microphone 134 at a far end (local to the apparatus 110, remote from the apparatus 10), is transmitted from the far end to the near end (local to the apparatus 10, remote from the apparatus 110), is played from an audio output 24 (e.g. at least one speaker) at the near end (local to the apparatus 10), is captured by microphones 34 at the near end (local to the apparatus 10), is transmitted back to the far end (remote from the apparatus 10), and is played from speakers at the far end (remote from the apparatus 10).

In this example, a user 2 of the apparatus 10 speaks, and the speech is captured as a spatial sound source 100, using multiple microphones 34_1, 34_2, and is processed 38. The resulting multi-channel input audio signal 39 is transmitted to one or more similar remote apparatus 110 for rendering, via audio outputs 124_1, 124_2, to respective user(s) as a spatial sound source 100.

If a user of one of the remote apparatus 110 speaks, the speech is captured, using one or more microphones 134_1, 134_2, for communication to the apparatus 10 as the output audio signal 21 where it is rendered via audio output 24 as output audio 25.

In at least some examples, the apparatus 10 comprises telecommunication means for receiving the multi-channel output audio signal 21 and for transmitting the processed multi-channel input audio 37 as the multi-channel input audio signal 39.

An acoustic echo can occur if an output audio 25 rendered at the audio output 24 and captured by the microphones 34 is subsequently rendered and captured by the apparatus 110 such that it is reproduced at the audio output 24.

The processing 38 of the multi-channel input audio 37 comprises suppressing spatiality of an acoustic echo.

It is important to note that processing 38 of the multi-channel input audio 37 does not merely suppress acoustic echo but suppresses spatiality of an acoustic echo.

Suppressing spatiality of an acoustic echo removes or significantly diminishes its apparent directionality.

In at least some examples, suppressing the spatiality of an acoustic echo comprises de-localizing a sound source representing the acoustic echo. De-localizing a sound source removes or significantly diminishes its apparent directionality and makes the sound source more diffuse. In some examples, this is achieved by spreading sound across multiple spatial channels such that it is diffuse and without specific directionality.

In at least some examples, suppressing the spatiality of an acoustic echo comprises spreading a sound source representing the acoustic echo across the multiple audio input channels 36.

In at least some example, the apparatus 10 comprises a spatial audio decoder for decoding the multi-channel output audio signal 21 and a spatial audio encoder for encoding the multi-channel input audio signal 39. The spatial audio encoder maintains the spatiality of sound sources, however, the processing 38 has de-spatialized the acoustic echo.

Spatial audio is a technique for rendering audio that allows a sound source to be controllably located in a sound space and to be controllably moved within that sound space. The location can be a bearing in two or three dimensions or a position in two or three dimensions, for example.

A spatial audio encoder encodes sufficient information for spatial audio rendering of one or more sound sources at controllable locations in a sound space (the controllable locations can change over time). The location can be a bearing in two or three dimensions or a position in two or three dimensions, for example.

A spatial audio decoder decodes sufficient information for spatial audio rendering of one or more sound sources at controllable locations in a sound space (the controllable locations can change over time). The location can be a bearing in two or three dimensions or a position in two or three dimensions, for example.

Spatial audio can for example comprise ambience sound plus directional sound such as speech. The ambience sound is spread across multiple spatial channels such that it is de-localized and does not have a specific spatiality (directionality

The Third Generation Partnership Project (3GPP) Immersive Voice and Audio Service (IVAS) standard is an example of a standard for spatial audio encoding/decoding designed to enable spatial audio communications. There are other techniques for providing spatial audio such as, for example, metadata assisted spatial audio (MASA) and Ambisonics.

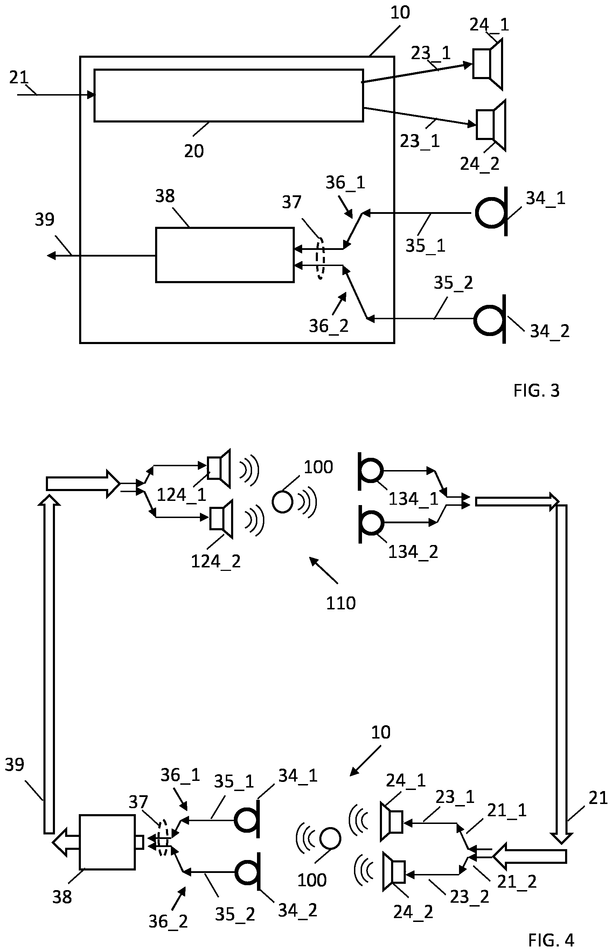

FIG 3 and 4 illustrate an apparatus 10 as illustrated in FIG. 1 and 2. However, in the examples of FIGs 3 & 4, the apparatus 10 comprises means for receiving an output audio signal 21 and means for rendering 20 the output audio signal 21, as rendered audio 23_1, 23_2, via multiple audio outputs 24_1, 24_2.

The means for rendering 20 is configured to control the rendered audio 23_1, 23_2 to render one or more spatial sound sources 100.

The means for rendering 20 is configured to changeably control a location/direction of the spatial sound source 100.

In this example the apparatus comprises means for receiving a multi-channel output audio signal 21 representing remote captured audio and means for rendering the multi-channel output audio signal 21 via multiple audio outputs 24.

The processing 38 of the multi-channel input audio 37 comprises suppressing spatiality of an acoustic echo. In at least some examples, suppressing the spatiality of an acoustic echo comprises de-localizing a sound source representing the acoustic echo. De-localizing a sound source removes or significantly diminishes its apparent directionality and makes the sound source more diffuse

In at least some examples, suppressing the spatiality of an acoustic echo comprises spreading a sound source representing the acoustic echo across the multiple audio input channels 36.

In this example, the processing 38 is illustrated as occurring only at the apparatus 10. However, equivalent processing can occur at the apparatus 110. The processing of the multi-channel input audio (at the apparatus 110, from microphones 134) comprises suppressing spatiality of an acoustic echo. In at least some examples, suppressing the spatiality of an acoustic echo comprises de-localizing a sound source representing the acoustic echo. De-localizing a sound source removes or significantly diminishes its apparent directionality and makes the sound source more diffuse. In at least some examples, suppressing the spatiality of an acoustic echo comprises spreading a sound source representing the acoustic echo across the multiple audio input channels.

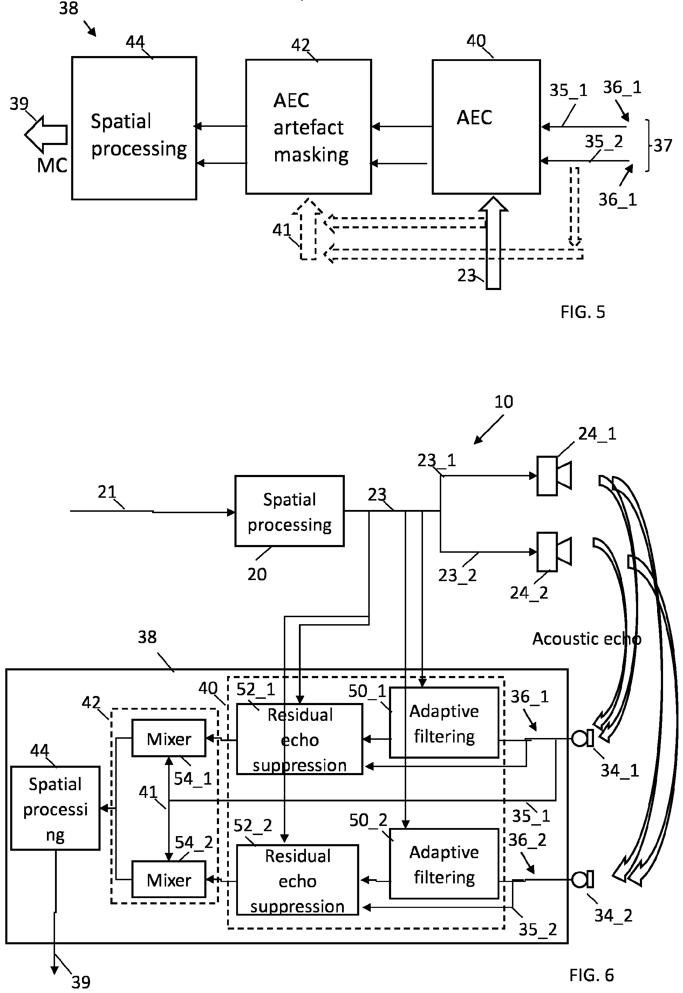

FIG 5 illustrates an example of means for processing 38 the multi-channel input audio 37 to produce a multi-channel input audio signal 39 representing local captured audio. The processing 38 of the multi-channel input audio 37 comprises suppressing spatiality of an acoustic echo.

The multi-channel input audio 37 comprises multiple audio input channels comprising at least: a first audio input channel 36_1 comprising first audio signal 35_1 captured at a first microphone 34_1; and a second audio input channel 36_2 comprising second audio signal 35_2 captured at a second microphone 34_2.

In this example, the processing 38 of the multi-channel input audio 37 comprises acoustic echo cancellation (AEC) 40, acoustic echo cancellation artefact masking 42 and spatial processing 44 to produce the multi-channel input audio signal 39 representing local captured audio.

In this example, suppressing the spatiality of the acoustic echo comprises adding audio (echo cancellation artefact masking signal 41) to the multiple audio input channels based on the same audio signals 35 captured by microphones 34 or based on the same rendered audio 23 rendered by one or more audio outputs 24.

In some examples, suppressing the spatiality of the acoustic echo comprises adding audio (echo cancellation artefact masking signal 41) to the multiple audio input channels based on the same audio signals 35 captured by microphones 34. The same audio is added to each of the multiple audio input channels 36. This has the effect of acoustic echo cancellation artefacts.

In some examples, suppressing the spatiality of the acoustic echo comprises adding audio (echo cancellation artefact masking signal 41) to the multiple audio input channels based on the same rendered audio 23 rendered by one or more audio outputs 24 of the apparatus. The same audio is added to each of the multiple audio input channels 36. This has the effect of masking acoustic echo cancellation artefacts.

FIGs 6, 7, 8 illustrates examples an example of acoustic echo cancellation 40. The acoustic echo cancellation (AEC) comprises at least adaptive filtering 50 and optionally includes residual echo suppression 52. Mixing 54 is used to provide acoustic echo cancellation artefact masking 42. The same echo cancellation artefact masking signal 41 is mixed to each channel. The remaining acoustic echo spatiality is reduced.

Adaptive filtering 50_i is applied to audio input channel 36_i. Adaptive filtering 50_i estimates the acoustic echo path transfer function (delay and frequency dependent attenuation) from the audio outputs 24 to the microphone 34_i. It then applies the transfer function to the rendered audio 23 and subtracts this from the microphone signals (audio signal 35_i). The filtering is adaptive because the acoustic path may change when the path between microphones 34_i and audio outputs 24 change.

The transfer function estimate is typically not perfect and some echo remains after adaptive filtering 50_i.

In some but not necessarily all examples, residual echo suppression 52_i is used to provide further frequency-dependent attenuation of the filtered audio signal 35 based on the rendered audio 23.

In some embodiments adaptive filtering 50_1 and adaptive filtering 50_2 may share adaptation functionality or parameters. In some embodiments residual echo suppression 52_1 and residual echo suppression 52 may share adaptation functionality or parameters. This is not illustrated in the figures for the sake of simplicity.

Artefacts are masked using acoustic echo cancellation artefact masking 42. This comprises adding some of an original microphone signal (audio signal 35_j) back to the filtered audio signal 35_i at mixer 54_i. This adds a little bit of the acoustic echo back to the signal. The signal from a single microphone 34_j is separately added, by mixers 54, to the audio signal 35 originating from the microphones 34. In this way the added acoustic echo is substantially mono and will not move as much regardless of the playback situation at the apparatus 10. Thus, the acoustic echo that a remote user would hear will be substantially mono and thus less disturbing than it would be otherwise.

Processing 38 of the multi-channel input audio comprises at least, for each of at least a sub set of the multiple audio input channels 36:
performing adaptive filtering 50_i for the audio input channel 36_i using an adaptive filter based on the multiple audio output channels (the rendered audio 23)
after performing adaptive filtering 50_i, mixing 54_i in echo cancellation artefact masking signal 41.

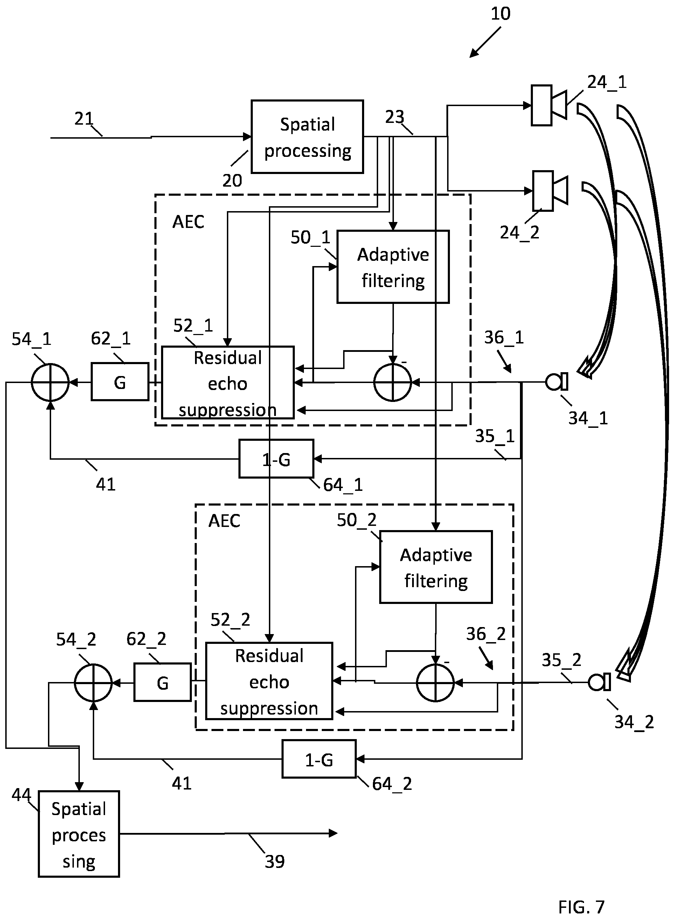

In FIG 6 & 7, the masking audio (echo cancellation artefact masking signal 41) mixed to the multiple audio input channels 36 is based on audio signal 35 captured by microphones 34 (the same audio captured by the same microphones). The same one or more microphones 34 are used to capture the same audio used as the masking audio (echo cancellation artefact masking signal 41) for each of the sub set of the multiple audio input channels. The same masking audio (echo cancellation artefact masking signal 41) is mixed 54 to each of the multiple audio input channels 36. This has the effect of masking any acoustic echo cancellation artefacts.

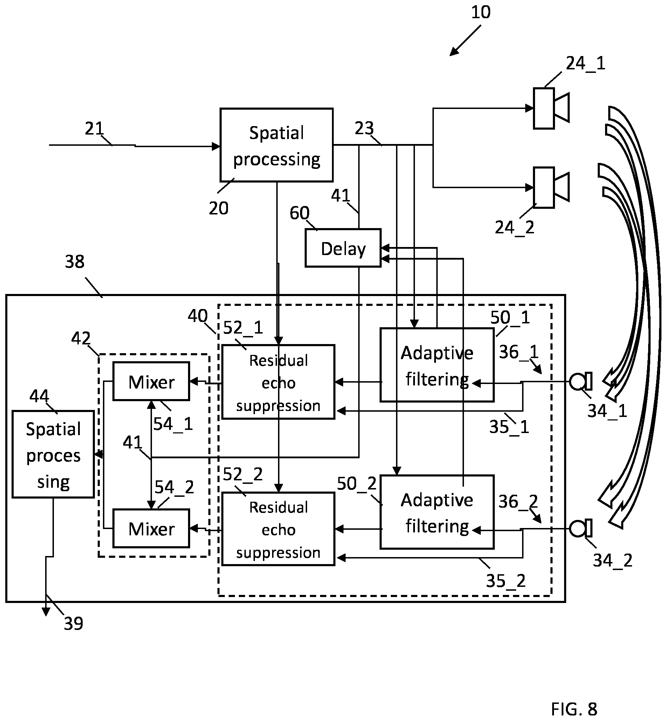

In FIG. 8, the masking audio (echo cancellation artefact masking signal 41) mixed to the multiple audio input channels 36 is based on rendered audio 23 rendered by one or more audio outputs 24 of the apparatus 10 (the same audio rendered by the same one or more audio outputs 24). The same rendered audio 23 is used as the masking audio (echo cancellation artefact masking signal 41) for each of the sub set of the multiple audio input channels 36. The same masking audio (echo cancellation artefact masking signal 41) is mixed 54 to each of the multiple audio input channels 36. This has the effect of masking any acoustic echo cancellation artefacts.

The adaptive filtering 50_i for the audio input channel 36_i using an adaptive filter based on the multiple audio output channels of the rendered audio 23 is a stage in acoustic echo cancellation.

Acoustic Echo Cancellation is a digital processing technique that reduces the perception of acoustic echo and comprises at least performing adaptive filtering of captured audio using an adaptive filter based on the rendered audio. The adaptive filter seeks to reduce a difference between the captured audio and the expected captured audio based on the rendered audio. Acoustic Echo Cancellation is performed on each audio input channel (audio captured at a particular microphone) independently.

In FIG 6 and 7, the masking audio (echo cancellation artefact masking signal 41) for all channels is one of the audio input channels 36_i. However, in other examples, the masking audio (echo cancellation artefact masking signal 41) for all channels is a combination of multiple ones of the multiple audio input channels 36.

FIG. 7 illustrates an adaptation to the apparatus 10 illustrated in FIG 6. In this example, suppressing the spatiality of the acoustic echo comprises mixing 54 the same masking audio (echo cancellation artefact masking signal 41), with the same or different gain weightings, to all or multiple ones of the multiple audio input channels 64.

In the example illustrated, before mixing at the mixer 54_i, the masking audio (echo cancellation artefact masking signal 41) is amplified at amplifier 62_i by a factor G and the audio signal 35_i of the audio input channel 36_i (after adaptive filtering 50_i) is amplified by amplifier 62_i by a factor 1-G. The exact value of G is experimentally determined. In some examples it is a fixed value. In some examples it is a fixed value between 0.75 and 0.95. In some examples it is adaptive. In some examples it is an adaptive value between 0.75 and 0.95.

In FIG 8, the masking audio (echo cancellation artefact masking signal 41) for all channels is one of the audio input channels of the rendered audio 23 or a same combination of multiple ones of the multiple audio input channels of the rendered audio 23.

The apparatus 10 illustrated in FIG 8 could also be adapted so that suppressing the spatiality of the acoustic echo comprises mixing 54 the same audio (echo cancellation artefact masking signal 41), with the same or different gain weightings (via amplifier 62), to all or multiple ones of the multiple audio input channels.

In at least some examples, the same masking audio (echo cancellation artefact masking signal 41) is delayed 60. The delay can be adaptive based on output from the adaptive filtering 50. In at least some examples, the same masking audio (echo cancellation artefact masking signal 41) is a delayed one of the audio input channels of the rendered audio 23 or a delayed combination of multiple ones of the multiple audio input channels of the rendered audio 23.

It will be appreciated from the preceding examples that the apparatus 10 comprises means for adapting suppressing spatiality of the acoustic echo. For example, adaptive filtering 50, adaptive delay 60, adaptive gain weightings (via amplifier 62).

It will be appreciated from the preceding examples that the processing 38 of the multi-channel input audio to produce a multi-channel input audio signal representing local captured audio, comprises suppressing spatiality of an acoustic echo, which comprises de-localizing a sound source representing the acoustic echo. De-localizing a sound source removes or significantly diminishes its apparent directionality and makes the sound source more diffuse. In some examples, this is achieved by spreading sound across multiple spatial channels such that it is diffuse and without specific directionality. In some example, this is achieved by adding audio (echo cancellation artefact masking signal 41) to the multiple audio input channels based on the same audio signals 35 captured by microphones 34 or based on the same rendered audio 23 rendered by one or more audio outputs 24.The same audio is added to each of the multiple audio input channels 36. The same echo cancellation artefact masking signal 41 can be mixed with the same or different gain weightings, to all or multiple ones of the multiple audio input channels 64.

Acoustic echo is problematic if its perceived position/direction moves constantly, in particular, if the perceived direction changes without any movement of the far end user. The apparatus 10 masks this using low-latency acoustic echo (~30ms or less round trip) after the original sound source.

In some examples the microphones 34 are part of the apparatus 10. In some examples the microphones 34 are separate from the apparatus 10 and are in communication with the apparatus 10. In some examples the microphones 34 form a linear array.

In some examples the audio output(s) 24 is/are part of the apparatus 10. In some examples the audio output(s) 24 is/are separate from the apparatus 10 and is/are in communication with the apparatus 10.

In some examples, the apparatus 10 is configured as user equipment in a third generation partnership (3GPP) radio telecommunications system. For example, the apparatus 10 is configured for communication with one or more transmission reception points of a cell and for intra-cell and inter-cell mobility.

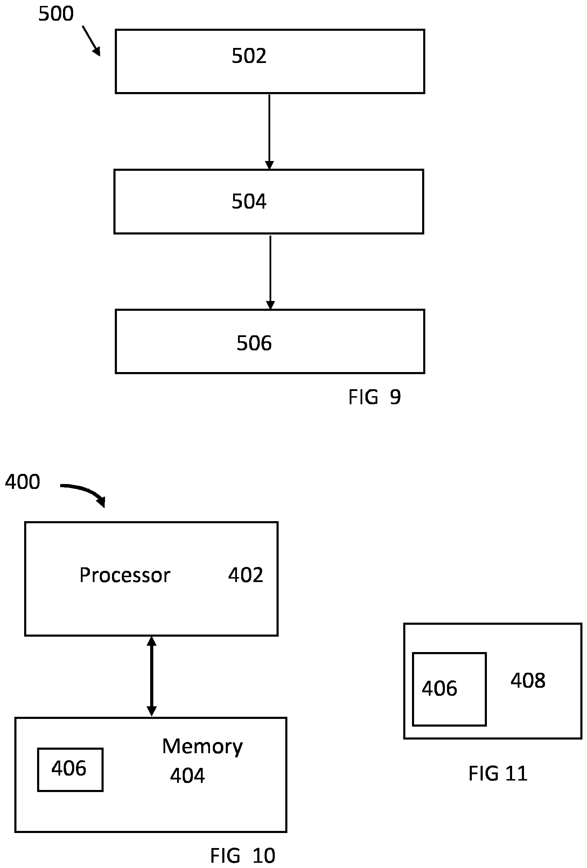

FIG 9 illustrates an example of a method 500.

The method 500 comprises, at block 502, rendering received output audio signal 21 via at least one audio output 24.

The method 500 comprises, at block 504, capturing multi-channel input audio 37, wherein the multi-channel input audio 37 comprises multiple audio input channels comprising at least:
a first audio input channel 36_1 comprising audio captured at a first microphone 34_1; and
a second audio input channel 36_2 comprising audio captured at a second microphone 34_2.

The method 500 comprises, at block 506, processing the multi-channel input audio 37 to produce a multi-channel input audio signal 39 representing local captured audio, wherein processing the multi-channel input audio 37 comprises suppressing spatial audio for an acoustic echo.

In at least some examples, suppressing the spatiality of an acoustic echo comprises de-localizing a sound source representing the acoustic echo. De-localizing a sound source removes or significantly diminishes its apparent directionality and makes the sound source more diffuse. In some examples, this is achieved by spreading sound across multiple spatial channels such that it is diffuse and without specific directionality.

The received output audio signal 21 can for example be a multi-channel output audio signal represent remote captured audio. The method can additionally comprise receiving the multi-channel output audio signal 21.

In some examples, the method 500, at block 502, comprises rendering the multi-channel output audio signal 21 via multiple audio outputs 24.

In some example, the method 500 is a computer-controlled method. In some examples, the method is performed as a consequence of execution of a computer program by one or more processors.

Spatial audio rendering makes acoustic echo cancellation (AEC) more challenging because there will be multiple speakers playing different audio signals to generate spatially located sound sources.

A moving far end sound source adds further challenges because it may change spatial audio playback in the near end which makes estimating the sound path (transfer function for adaptive filtering) more difficult.

Acoustic echo cancellation (AEC) is not fully effective for spatial audio and will likely produce AEC artefacts.

The inventors have observed that in low-latency communications (round-trip delay of less than 30ms), an acoustic echo occurs quickly after the original sound is heard and is partially masked by the original sound.

The inventors have realized that at least some of the AEC artefacts with low delay communication can be masked by suppressing spatiality of an acoustic echo. Controlling the spatialness of the (remaining) acoustic echo is a new technique.

The apparatus 10 reduces playback signal acoustic echo from microphone signals (that the apparatus 10 captures) before transmitting to the far end a spatial audio signal created from the microphone signals. It can retain at least some spatial audio for locally generated sound sources and suppresses spatiality of an acoustic echo.

In FIG 6 and 7, the masking audio (echo cancellation artefact masking signal 41) for all channels is based on one or more of the audio input channels 36_i. As audio input channels 36_i, locally captured at the microphones 34, is used in the mixer 54, spatiality of the locally captured sounds may be reduced a little, not as much as the spatiality of the echo is reduced.

In FIG 8, the masking audio (echo cancellation artefact masking signal 41) for all channels is based on one or more of the audio input channels of the rendered audio 23. As audio input channels of the rendered audio 23 are used in the mixer 54, the locally captured sounds retain their spatiality.

In some examples, a signal related to the playback signal acoustic echo is added, mono, to the spatial audio channels to mask the (remaining) acoustic echo cancellation artefacts.

Thus, the spatiality (directionality) of the acoustic echo is suppressed, its perceived location does not change, and it is not as annoying to a listener as it otherwise would be.

In some examples, the echo cancellation artefact masking signal 41 is a captured audio signal 35_i from one microphone 34_j. In some examples, the echo cancellation artefact masking signal 41 is a signal based on a fixed combination of a set of captured audio signals 35 from microphones 34. The echo cancellation artefact masking signal 41 is mono- the same signal is used for every audio input channel 36_i. The mono echo cancellation artefact masking signal 41 is added to the audio signals 35 captured by microphones 34 after acoustic echo has been removed on a per audio channel basis.

In some examples, the echo cancellation artefact masking signal 41 (used for every audio input channel 36_i) is rendered audio 23 (the original near-end playback signal). The rendered audio 23 is converted to mono- the same signal is used for every audio input channel 36_i. The mono echo cancellation artefact masking signal 41 can be based on one channel of the rendered audio 23 or a combination of a set of channels of the rendered audio 23 for different audio outputs 24. The echo cancellation artefact masking signal 41 is mono- the same signal is used for every audio input channel 36_i. The mono echo cancellation artefact masking signal 41 is added to the audio signals 35 captured by microphones 34 after acoustic echo has been removed on a per audio channel basis.

Thus the echo cancellation artefact masking signal 41 can be a mono downmix of multiple channels or a single channel selection.

In some examples, a delay is added to the echo cancellation artefact masking signal 41. This allows the delayed echo cancellation artefact masking signal 41 to match the delay in the acoustic path from audio output 24 to microphones 34. This can be done by using the same delay that is estimated in adaptive filtering 50.

In some examples, further processing is added to the echo cancellation artefact masking signal 41. This allows the delayed echo cancellation artefact masking signal 41 to mask the artefact more efficiently. For example, the same filtering that was used in the adaptive filtering can be used to filter the echo cancellation artefact masking signal 41. Not shown in the figures.

Fig 10 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 10 the controller 400 may be implemented using instructions that enable hardware functionality, for example, by using executable instructions 406 in a general-purpose or special-purpose processor 402 that may be stored on a machine readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores instructions, program, or code 406 that controls the operation of the apparatus 10 when loaded into the processor 402. The computer program instructions, program or code am 406, provide the logic and routines that enables the apparatus 10 to perform the methods illustrated in the accompanying FIGs. The processor 402 by reading the memory 404 is configured to load and execute the instructions, program, or code 406.

The apparatus 10 comprises:
at least one processor 402; and
at least one memory 404 storing instructions that, when executed by the at least one processor 402, cause the apparatus at least to:
   rendering received output audio signal 21 via at least one audio output 24.
   capturing multi-channel input audio 37, wherein the multi-channel input audio 37 comprises multiple audio input channels comprising at least:
      a first audio input channel 36_1 comprising audio captured at a first microphone 34_1; and
      a second audio input channel 36_2 comprising audio captured at a second microphone 34_2; and
   processing the multi-channel input audio 37 to produce a multi-channel input audio signal 39 representing local captured audio, wherein processing the multi-channel input audio 37 comprises suppressing spatial audio for an acoustic echo.

In at least some examples, suppressing the spatiality of an acoustic echo comprises de-localizing a sound source representing the acoustic echo. De-localizing a sound source removes or significantly diminishes its apparent directionality and makes the sound source more diffuse. In some examples, this is achieved by spreading sound across multiple spatial channels such that it is diffuse and without specific directionality.

In some examples, there is a (computer implemented) system comprising:
multiple apparatus 10 that provide Immersive Voice and Audio Service (IVAS) or other live full duplex telecommunication service.

As illustrated in Fig 11, the instructions, program, or code 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

The term "non-transitory" as used herein, is a limitation of the medium itself (i.e., tangible, not a signal ) as opposed to a limitation on data storage persistency (e.g., RAM vs. ROM).

Computer program instructions for causing an apparatus to perform at least the following or for performing at least the following:
rendering received output audio signal 21 via at least one audio output 24.
capturing multi-channel input audio 37, wherein the multi-channel input audio 37 comprises multiple audio input channels comprising at least:
   a first audio input channel 36_1 comprising audio captured at a first microphone 34_1; and
   a second audio input channel 36_2 comprising audio captured at a second microphone 34_2; and
processing the multi-channel input audio 37 to produce a multi-channel input audio signal 39 representing local captured audio, wherein processing the multi-channel input audio 37 comprises suppressing spatial audio for an acoustic echo.

In at least some examples, suppressing the spatiality of an acoustic echo comprises de-localizing a sound source representing the acoustic echo. De-localizing a sound source removes or significantly diminishes its apparent directionality and makes the sound source more diffuse. In some examples, this is achieved by spreading sound across multiple spatial channels such that it is diffuse and without specific directionality.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:
(a) hardware-only circuitry implementations (such as implementations in only analog and/or digital circuitry) and
(b) combinations of hardware circuits and software, such as (as applicable):
   i. a combination of analog and/or digital hardware circuit(s) with software/firmware and
   ii. any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can, for example be a module. A controller 400 of the apparatus 10 can, for example be a module.

Where a structural feature has been described, it may be replaced by means for performing one or more of the functions of the structural feature whether that function or those functions are explicitly or implicitly described.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus 10 can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising means for:
rendering a received output audio signal via at least one audio output;
locally capturing multi-channel input audio, wherein the multi-channel input audio comprises multiple audio input channels comprising at least:
a first audio input channel comprising audio captured at a first microphone; and
a second audio input channel comprising audio captured at a second microphone; and
processing the multi-channel input audio to produce a multi-channel input audio signal representing local captured audio, wherein processing the multi-channel input audio comprises suppressing spatiality of an acoustic echo,
wherein suppressing the spatiality of an acoustic echo comprises de-localizing a sound source representing the acoustic echo.

2. An apparatus as claimed in claim 1,
wherein suppressing the spatiality of an acoustic echo comprises spreading a sound source representing the acoustic echo across the multiple audio input channels.

3. An apparatus as claimed in any preceding claim,
wherein suppressing the spatiality of an acoustic echo comprises adding audio to the multiple audio input channels based on the same audio captured by one or more microphones or based on the same audio rendered by one or more audio outputs.

4. An apparatus as claimed in any preceding claim,
wherein suppressing the spatiality of an acoustic echo comprises adding mono audio to the multiple audio input channels.

5. An apparatus as claimed in any preceding claim,
wherein suppressing the spatiality of an acoustic echo comprises acoustic echo mixing the same audio signal, with the same or different gain weightings, to multiple audio input channels.

6. An apparatus as claimed in claim 5,
wherein the multi-channel output audio comprises multiple audio output channels wherein the same audio signal is:
one of the audio output channels;
a combination of multiple ones of the multiple audio output channels;
one of the audio input channels;
a combination of multiple ones of the multiple audio input channels.

7. An apparatus as claimed in claim 5 or 6,
wherein same audio signal is:
a delayed one of the audio output channels;
a delayed combination of multiple ones of the multiple audio output channels.

8. An apparatus as claimed in any preceding claim,
comprising means for adapting suppressing spatiality of the acoustic echo.

9. An apparatus as claimed in any preceding claim,
wherein the multi-channel output audio comprises multiple audio output channels rendered via respective audio outputs,
wherein processing the multi-channel input audio comprises at least, for each of at least a sub set of the multiple audio input channels:
performing adaptive filtering for the audio input channel using an adaptive filter based on the multiple audio output channels;
after performing adaptive filtering, mixing in audio based on the same audio captured by the same one or more microphones or based on the same audio rendered by the same one or more audio outputs,
wherein the same one or more microphones used to capture the same audio are the same at least for each of the sub set of the multiple audio input channels and wherein the same one or more audio outputs used to render the same audio are the same at least for each of the sub set of the multiple audio input channels.

10. An apparatus as claimed in claim 9,
wherein the performing adaptive filtering for the audio input channel using an adaptive filter based on the multiple audio output channels is a stage in acoustic echo cancellation.

11. An apparatus as claimed in any preceding claim,
comprising telecommunication means for receiving the multi-channel output audio signal and for transmitting the processed multi-channel input audio as the multi-channel input audio signal.

12. An apparatus as claimed in any preceding claim, configured as user equipment.

13. A method comprising:
rendering a received output audio signal via at least one audio output;
capturing multi-channel input audio, wherein the multi-channel input audio comprises multiple audio input channels comprising at least:
a first audio input channel comprising audio captured at a first microphone; and
a second audio input channel comprising audio captured at a second microphone; and
processing the multi-channel input audio to produce a multi-channel input audio signal representing local captured audio, wherein processing the multi-channel input audio comprises suppressing spatial audio for an acoustic echo, wherein suppressing the spatiality of an acoustic echo comprises de-localizing a sound source representing the acoustic echo.

14. A method as claimed in claim 13,
wherein suppressing the spatiality of an acoustic echo comprises spreading a sound source representing the acoustic echo across the multiple audio input channels.

15. A method as claimed in claim 13 or 14,
wherein suppressing the spatiality of an acoustic echo comprises adding audio to the multiple audio input channels based on the same audio captured by one or more microphones or based on the same audio rendered by one or more audio outputs.
